(19) Europäisches Patentamt
European Patent Office
Office européen des brevets

(11) **EP 3 783 522 A1**

(12) **EUROPEAN PATENT APPLICATION**
published in accordance with Art. 153(4) EPC

(43) Date of publication:
**24.02.2021 Bulletin 2021/08**

(51) Int Cl.:
***G06F 40/30*** (2020.01)

(21) Application number: **19915576.3**

(22) Date of filing: **28.06.2019**

(86) International application number:
**PCT/CN2019/093873**

(87) International publication number:
**WO 2020/258303 (30.12.2020 Gazette 2020/53)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Siemens Aktiengesellschaft
80333 München (DE)**

(72) Inventors:
• **LI, Jing
Shanghai 201208 (CN)**

• **ZHANG, RuigUo
Shanghai 201208 (CN)**
• **SI, Weiping
Shanghai 201208 (CN)**

(74) Representative: **Isarpatent
Patent- und Rechtsanwälte Behnisch Barth
Charles
Hassa Peckmann & Partner mbB
Friedrichstrasse 31
80801 München (DE)**

(54) **SEMANTIC MODEL INSTANTIATION METHOD, SYSTEM AND DEVICE**

(57) The present invention provides a semantic model instantiation method, system and apparatus, including the following steps: S1, receiving an ontology-based semantic model, parsing the semantic model and converting the semantic model into a characteristic vector set, where the characteristic vectors represent the classes and attributes of an ontology and a relation between the attributes; S3, importing a semi-structured file, and converting the semi-structured file into a key word vector based on a semantic vector of the semantic model; and S4, comparing a correlation between the semantic vector and the key word vector, and identifying a key word vector corresponding to the semantic vector. The present invention can greatly reduce workload and expense for constructing a knowledge graph, and thus accelerates knowledge-based convenient service.

FIG. 1

**Description**

Technical Field

The present invention relates to the field of industrial software, and particularly relates to a semantic model instantiation method, system and apparatus.

Related Art

Many industries including social network, e-commerce and manufacture have started to provide knowledge-based intelligent functions and services to clients, and an extensible knowledge database is needed to be taken as a basis. A domain semantic model or mode may be established by a domain expert, however, it is not easy to fill a knowledge database with data according to a semantic model.

For example, filling a semantic model with data instances or data individuals to execute instantiation of the semantic model still mainly depends on manual work. Typically, when a semantic model is instantiated, data instances are manually identified and extracted by engineers in the art. Or data need to be processed in some predefined data formats or intermediate forms, to fill a knowledge database with the data by utilizing a customized program. By adopting these methods, manpower participation degree is high, and as a result, expense is high and a long time is spent. In many industrial fields, original data are of different classes, so it is hard to apply a customized data extracting process to other conditions. Therefore, customers lack tools for automatically extracting data instances from domain files based on a defined domain semantic model.

Two solutions are provided in the prior art. One solution is form analysis and retrieval, and it is targeted to a correlation between customer problems and form contents . When a customer queries a problem, a form analysis and retrieval algorithm will search in data of forms to determine one or more forms capable of potentially answering the above-mentioned problem. Retrieval methods include a character string similarity algorithm BM25, cell data similarity computing and the like . A system may include apparatuses for processes of semantic parsing, form format analysis, form problem similarity comparison, form retrieval and the like. However, such solutions only pay attention to how to match customer inquiry with form contents.

The other solution is ontology matching, and it is targeted to find a correlation between entities of two ontologies including classes, parameters and instances. Ontology matching includes two basic steps: similar point computing and queue extracting. In these steps, two ontologies are compared from the perspective of two languages and structures, with a purpose of transmitting data from one ontology model to the other ontology model. However, such solutions do not deem form as input, some similar methods also tried extracting network form information based on ontology information, however, these solutions are mainly based on a heuristic rule, and it is hard to extend various layouts to any form.

Moreover, existing software tools of the industrial field cannot automatically identify a correlation between any semi-structured file (form) and a domain semantic model to extract relevant data instances.

SUMMARY

According to a first aspect, the present invention provides a semantic model instantiation method, including the following steps: S1, receiving an ontology-based semantic model, parsing the semantic model and converting the semantic model into a characteristic vector set, where the characteristic vectors represent the classes and attributes of an ontology and a relation between the attributes; S3, importing a semi-structured file, and converting the semi-structured file into a key word vector based on a semantic vector of the semantic model; and S4, comparing a correlation between the semantic vector and the key word vector, and identifying a key word vector corresponding to the semantic vector.

Further, the method also includes the following step between step S1 and step S3: S2, matching a near-synonym of a word of the semantic vector based on the semantic vector of the semantic model, where step S3 also includes the following step: converting the semi-structured file into a key word vector based on the semantic vector based on the semantic model and the near-synonym thereof.

Further, the method also includes the following step after step S4: extracting instance data of the semi-structured file of the key word vector corresponding to the semantic vector to a database. Further, the ontology includes classes, attributes and a relation between the attributes.

Further, step S3 also includes the following step when the semi-structured file is a form file: determining a header position of the form file, and identifying a data division of the form file. Further, step S4 also includes the following steps: executing multiple correlation computing methods based on the semantic vector, a synonym lexicon and the key word vector to obtain multiple correlation values to compare a correlation of the semantic vector and the key word vector, weighting the correlation values to construct a correlation matrix and screening out parameter mapping to identify a key word vector corresponding to the semantic vector, where the parameter mapping shows a matched key word vector and semantic vector.

Further, the correlation matrix is constructed according to the following algorithm:

$$M_{ij} = \sum w_q \text{Sim}_q(O_i, K_j)$$

where $M_{ij}$ is a correlation, 0 is a semantic vector, k is a key word vector, $w_q$ is a weight, $\text{Sim}_q$ is a correlation algorithm, and i,j,q are natural numbers.

According to a second aspect, the present invention provides a semantic model instantiation system, including a processor; and a memory coupled with the processor, where the memory has instructions stored therein, the instructions enable an electronic device to execute actions when being executed by the processor, and the actions include : S1, receiving an ontology-based semantic model, parsing the semantic model and converting the semantic model into a characteristic vector set, where the characteristic vectors represent the classes and attributes of an ontology and a relation between the attributes; S3, importing a semi-structured file, and converting the semi-structured file into a key word vector based on a semantic vector of the semantic model; and S4, comparing a correlation between the semantic vector and the key word vector, and identifying a key word vector corresponding to the semantic vector.

Further, the following action is also included between action S1 and action S3 : S2, matching a near-synonym of a word of the semantic vector based on the semantic vector of the semantic model, where action S3 also includes: converting the semi-structured file into a key word vector based on the semantic vector based on the semantic model and the near-synonym thereof.

Further, the following action is included after action S4: extracting instance data of the semi-structured file of the key word vector corresponding to the semantic vector to a database.

Further, the ontology includes classes, attributes and a relation between the attributes.

Further, action S3 also includes the following action when the semi-structured file is a form file: determining a header position of the form file, and identifying a data division of the form file. Further, action S4 also includes: executing multiple correlation computing methods based on the semantic vector, a synonym lexicon and the key word vector to obtain multiple correlation values to compare a correlation of the semantic vector and the key word vector, weighting the correlation values to construct a correlation matrix and screening out parameter mapping to identify a key word vector corresponding to the semantic vector, where the parameter mapping shows a matched key word vector and semantic vector.

Further, the correlation matrix is constructed according to the following algorithm:

$$M_{ij} = \sum w_q \text{Sim}_q(O_i, K_j)$$

where $M_{ij}$ is a correlation, 0 is a semantic vector, k is a key word vector, $w_q$ is a weight, $\text{Sim}_q$ is a correlation algorithm, and i,j,q are natural numbers.

According to a third aspect, the present invention provides a semantic model instantiation apparatus, including a first converting apparatus, for receiving an ontology-based semantic model, parsing the semantic model and converting the semantic model into a characteristic vector set, where the characteristic vectors represent the classes and attributes of an ontology and a relation between the attributes; a second converting apparatus, for importing a semi-structured file, and converting the semi-structured file into a key word vector based on a semantic vector of the semantic model; and a comparing and identifying apparatus, comparing a correlation of the semantic vector and the key word vector, and identifying a key word vector corresponding to the semantic vector.

According to a fourth aspect, the present invention provides a computer program product, the computer program product is tangibly stored on a computer readable medium and includes a computer executable instruction, and the computer executable instruction enables at least one processor to execute the method described according to the first aspect of the present invention when being executed.

According to a fifth aspect, the present invention provides a computer readable medium, the computer readable medium stores a computer executable instruction, and the computer executable instruction enables at least one processor to execute the method described according to the first aspect of the present invention when being executed.

Innovations of the present invention lie in that a semantic model is converted into semantic vectors, including class vectors and correlation vectors, synonyms are computed and a synonym lexicon is constructed for each semantic vector. A separate semantic vector acts as an information extraction guidance. As a result, any semantic model may be dissected to be many retrieval formulae for data retrieval, being conducive to automatic matching and a data retrieval process described by the semantic model.

Innovation of the present invention also lies in that useful header data coming from any semi-structured file are organized and converted into key word vectors, including a key word parameter division identifying form files and a data division, and these key word parameters are extracted to obtain a tree structure. As a result, a form may be converted into vectors, and the vectors may be used for further comparison and computation for data extraction. Innovation of the present invention further lies in that correlation mapping of any semantic vector and a key word vector is extracted, and relevant information is extracted from a semi-structured file. This is for computing distinction between the semantic vector and the key word vector, and matching parameter mapping. According to the present invention, a model-based rapid and automatic mode for estimating and matching data is realized.

The present invention can greatly reduce workload and expense for constructing a knowledge graph, and thus accelerates knowledge-based convenient service.

BRIEF DESCRIPTION OF THE DRAWINGS

FIG. 1 is a schematic structure diagram of a semantic model instantiation apparatus according to a specific embodiment of the present invention;

FIG. 2 is a schematic structure diagram of an ontology of a semantic model of the semantic model instantiation apparatus according to a specific embodiment of the present invention;

FIG. 3 is a set-up diagram of a second converting apparatus 120 of the semantic model instantiation apparatus according to a specific embodiment of the present invention;

FIG. 4 is a schematic diagram of form file processing of the semantic model instantiation apparatus according to a specific embodiment of the present invention;

FIG. 5 is a step flowchart for defining four key divisions ULC, RH, CH, data of a form file of the semantic model instantiation apparatus according to a specific embodiment of the present invention;

FIG. 6 is a schematic diagram of a key word matrix of the semantic model instantiation apparatus according to a specific embodiment of the present invention;

FIG. 7 is a schematic diagram of correlation computation of the semantic model instantiation apparatus according to a specific embodiment of the present invention; and

FIG. 8 a schematic diagram of a correlation matrix of the semantic model instantiation apparatus according to a specific embodiment of the present invention.

DETAILED DESCRIPTION

Specific implementations of the present invention will be described below with reference to the accompanying drawings.

The present invention provides a semantic model instantiation mechanism, and the semantic model instantiation mechanism is capable of extracting data instances based on an abstract model, and utilizes corresponding semi-structured data and a semantic model. According to the present invention, useful data instances are rapidly determined and extracted to a knowledge database by automatically screening and executing domain semi-structured files based on semantic definition with reasonable accuracy, so as to automatically extract data from the semi-structured file based on any semantic model.

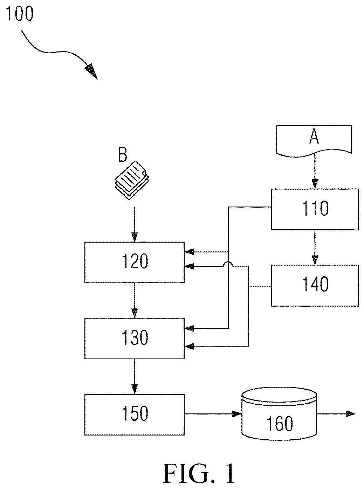

As shown in FIG. 1, the semantic model instantiation method provided by the present invention is executed by a semantic model instantiation apparatus 100. The semantic model instantiation apparatus 100 includes a first converting apparatus 110, a second converting apparatus 120, a comparing and identifying apparatus 130, a matching apparatus 140, an extracting apparatus 150 and a database 160. The first converting apparatus 110 parses a semantic model A, and converts the semantic model A into a characteristic vector set. The matching apparatus 140 is configured to match a near-synonym of a word of the semantic vector of the semantic model A. Then, the second converting apparatus 120 inputs a semantic vector and a near-synonym of a word thereof, and imports a semi-structured file B, so as to convert the semi-structured file B into a key word vector based on the semantic vector of the semantic model A. Then, the comparing and identifying apparatus 130 compares a correlation between the semantic vector and the key word vector, and identifies a key word vector corresponding to the semantic vector. Finally, the extracting apparatus 150 extracts instance data of the semi-structured file of the key word vector corresponding to the semantic vector to the database 160.

According to a first aspect, the present invention provides a semantic model instantiation method, including the following steps:

Firstly, step S1 is executed. The first converting apparatus 110 receives an ontology-based semantic model A, parses the semantic model A and converts the semantic model A into a characteristic vector set, and the characteristic vectors represent the classes and attributes of an ontology and a relation between the attributes. That is, the first converting apparatus 110 resolves the semantic model A into a concept of classes and subclasses, and describes classes and subclasses with characteristic vectors.

The ontology includes classes, attributes and a relation between the attributes. The classes also include subclasses of the classes. According to the present invention, an ontology base may be established in advance, and the ontology base is constantly updated in a process of executing the present invention. For example, classes of the ontology base include: devices, products, manpower, materials, technologies, maintenance and the like. The above-mentioned classes have interrelation.

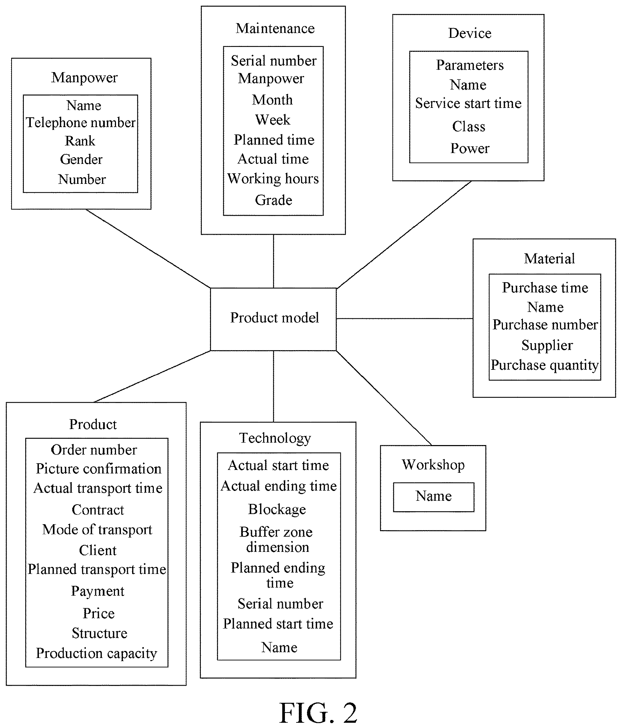

For example, as shown in FIG. 2, the ontology includes major product models, the product models include multiple subclasses: maintenance, devices, workshop, technology, products and manpower. Each subclass corresponds to multiple attributes. Specifically, the attributes of manpower include name, telephone number, rank, gender and serial number; the attributes of maintenance include serial number, manpower, month, week, planned time, actual time, working hours and grade; the attributes of a device include parameters, name, service start time, class and power; the attributes of a workshop include name; the attributes of a technology include actual start time, actual ending time, blockage, buffer zone dimension, planned ending time, serial number, planned start time and name; the attributes of a product include order number, picture confirmation, actual transport time, contract, mode of transport, clients, planned transport time, payment, price, structure, production capacity and the like.

Therefore, output of the first converting apparatus 110 is characteristic vectors and a set of relations among multiple vectors, where the characteristic vectors include semantic vectors and characteristic vectors, and the characteristic vectors are specially vectors of the ontology class. Specifically, each vector includes class name, vector name and a relation therebetween. As a result, exemplarily, the format of one of the semantic vectors is: (class name, vector 1, vector 2... vector N, relation 1, relation 2... relation M)

where for example, semantic vectors are "a worker operates a machine C, " "a worker produces products" and "a machine has a fault", where "operate", "produce" and "has" are relations therebetween.

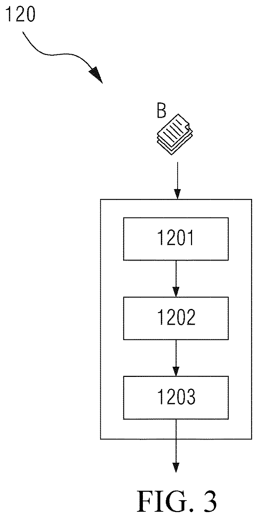

Then, step S3 is executed. The second converting apparatus 120 imports a semi-structured file B, and converts the semi-structured file B into a key word vector based on the semantic vector of the semantic model A. Specifically, the second converting apparatus 120 extracts header data from any semi-structured file B and reorganizes these header data according to a certain logic for subsequent processing, where the semi-structured file B is a form file. As shown in FIG. 3, the second converting apparatus 120 includes three sub-apparatuses: a preprocessing apparatus 1201, an identifying apparatus 1202 and a key word apparatus 1203. Step S3 includes three substeps S31, S32 and S33. There is a major file class in many industrial fields, for example, a production field is a semi-structured file, such as a form in a database, a manually constructed Excel form and a network HTML form.

When the semi-structured file is a form file, step S3 also includes the following step: determining a header position of the form file, and identifying a data division of the form file.

In substep S31, the preprocessing apparatus 1201 executes basic conversion and cleaning for an input form file. For example, the preprocessing apparatus 1201 is capable of converting a form file excel into an HTML form, this is because the HTML form includes richer and clearer header data.

Then, in substep S32, the identifying apparatus 1202 reads the form preprocessed by the preprocessing apparatus 1201 to identify the attribute of data content in the form file. Specifically, according to the present invention, four key divisions ULC, RH, CH and Data are defined for any form file, and then these key divisions are determined.

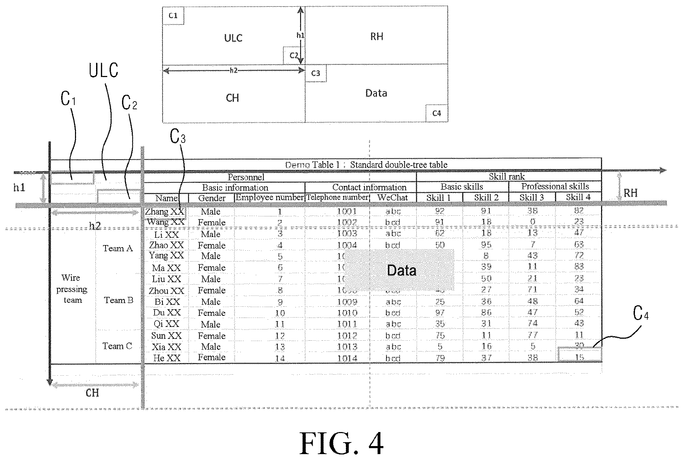

Specifically, referring to FIG. 4, firstly, four key divisions ULC, RH, CH and Data are defined for form $B_1$, so as to identify the header and content of the form $B_1$. Firstly, referring to a form structure B' , B' is a two-dimensional form. The header division is the RH division, RH shows the title depth of the form row, and the height of RH is $h_1$. CH shows the title depth of the form column, with width of $h_2$. ULC exists between RH and CH, ULC shows the upper left space of the whole form, the height of ULC is $h_1$, and the width of ULC is $h_2$. The division below RH and on the right of CH is the data divisions Data, where the upper left grid of the data division is $C_3$, and the lower right grid is $C_4$. The upper left grid of ULC is $C_1$, and the lower right grid of ULC is $C_2$. The question is how to find and define four key divisions ULC, RH, CH and Data.

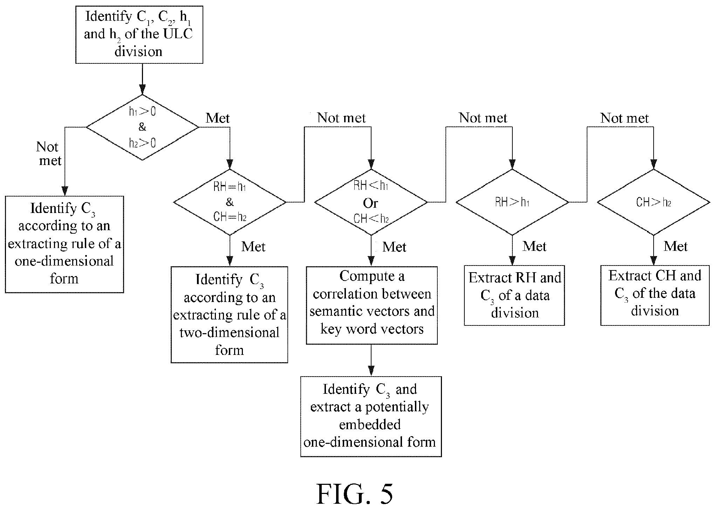

Specifically, as shown in FIG. 5, firstly, the ULC division is found, and $C_1$, $C_2$, $h_1$ and $h_2$ of the ULC division are identified. When $h_1>0$ and $h_2>0$, a judgement is then made as to whether RH=$h_1$ and CH=$h_2$. When the above-mentioned conditions are met, the form $B_1$ is judged as a two-dimensional form, for which $C_3$ should be identified according to an extracting rule of a two-dimensional form. Otherwise, it is judged that there is no ULC division, and as a result, it is judged that for this form, $C_3$ should be identified according to an extracting rule of a one-dimensional form.

Then, when RH=$h_1$ and CH=$h_2$ are not met, a judgement is then made as to whether RH<$h_1$ or CH<$h_2$, and when RH<$h_1$ or CH<$h_2$ is met, a correlation between the semantic vectors and the key word vectors is then computed, $C_3$ is identified and a potentially embedded one-dimensional form is extracted.

When RH<$h_1$ or CH<$h_2$ is not met, a judgement is then made as to whether RH>$h_1$, and when RH>$h_1$ is met, only RH and $C_3$ of the data division are extracted. When RH>$h_1$ is not met, a judgement is then made as to whether CH>$h_2$, and when CH>$h_2$ is met, only CH and $C_3$ of the data division are extracted.

Therefore, by executing the above-mentioned steps, four key divisions ULC, RH, CH and data may be found out and defined to determine the header division and data division of the form $B_1$.

In substep S33, input of the key word apparatus 1203 is a form with a key position, and a form title and attribute are extracted by applying specifications and rules and are stored in a tree structure. The tree structure will be reorganized as weight vectors for subsequent analysis procedures.

For example, the attribute of a one-dimensional form is extracted as a tree structure and converted into the following form key word vectors:

| Operati ng device ledger | Seria l numbe r | Clas s | Importan ce | Device attributi on | Installati on site | Devic e name | Devic e numbe r | ... | Remar k |
|---|---|---|---|---|---|---|---|---|---|
| 0 | 1 | 1 | 1 | 1 | 1 | 1 | 1 | ... | 1 |

Further, according to an exemplary embodiment of the present invention, the method also includes step S2 between step S1 and step S3: matching a near-synonym of a word of the semantic vector based on the semantic vector of the semantic model. Step S3 also includes the following step: the second converting apparatus 120 converts the semi-structured file into a key word vector based on the semantic vector based on the semantic model and the near synonym thereof.

The second converting apparatus 120 is configured to generate a group of near-synonyms for each word of the semantic vectors. Although existing software can automatically provide near-synonyms, it is difficult for these software tools to provide a reasonable result of a complicated or compound word, especially words formed by more than one sub-word. As a result, the present invention provides the second converting apparatus 120 applicable to complicated words or compound words.

For example, a compound word is firstly divided into multiple sub-words (sub-word #1, sub-word #2... sub-word #n), then a correlation of each sub-word is computed, and finally, the compound word is constructed by utilizing a correlation principle. As a result, the second converting apparatus 120 includes a synonym result list to establish a synonym matrix, and therefore, a key word lexicon is also formed by a key word matrix.

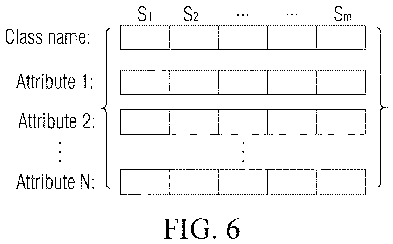

FIG. 6 shows a key word matrix, class name has a first attribute$_1$, a second attribute$_2$... an $N^{th}$ attribute$_N$. The above-mentioned class name, first attribute$_1$, second attribute$_2$... $N^{th}$ attribute$_N$ all have an initial word, as well as original words and synonyms $s_1$, $s_1$... $s_M$ thereof. For example, original words and synonyms thereof are as follows:

| Original words | Synonyms |
|---|---|
| Device | Electronic device Device of Apparatus Equipment |
| Name | Nomination Title English name Chinese name |
| Class | Category Variety Feature Various types |
| Price | Price Production cost List price |

| | Selling price |
|---|---|
| Entry date | Entry year Entry timetable Entry month Entry date |

Finally, step S4 is executed. The comparing and identifying apparatus 130 compares a correlation of the semantic vectors and the key word vectors, and identifies key word vectors corresponding to the semantic vectors. Specifically, according to a specific embodiment of the present invention, the key word vector is a form key word vector. As a result, the comparing and identifying apparatus 130 computes a correlation of the form key word vector and the semantic vector. Input of the comparing and identifying apparatus 130 includes key word vectors, semantic vectors and a synonym lexicon. According to the present invention, distinction between the key word vector and the semantic vector is computed by utilizing an algorithm.

Specifically, step S4 also includes the following steps: executing multiple correlation computing methods based on the semantic vector, the synonym lexicon and the key word vector to obtain multiple correlation values to compare a correlation of the semantic vector and the key word vector, weighting the correlation values to construct a correlation matrix and screening out parameter mapping to identify a key word vector corresponding to the semantic vector, where the parameter mapping shows a matched key word vector and semantic vector.

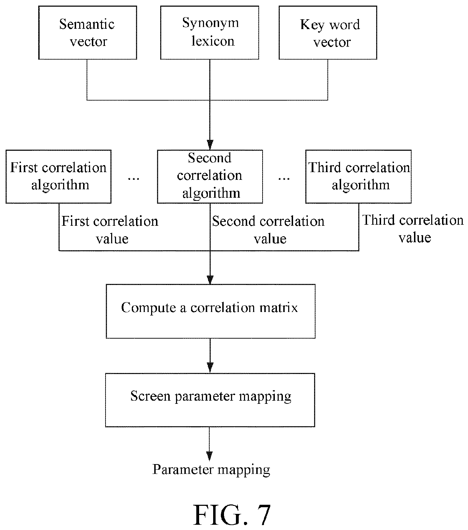

As shown in FIG. 7, multiple correlation computing methods are executed based on the semantic vector, the synonym lexicon and the key word vector. Exemplarily, correlation algorithms include a first correlation algorithm, a second correlation algorithm and a third correlation algorithm. For example, the first correlation algorithm is a cilin correlation algorithm, the second correlation algorithm is a word2vector correlation algorithm, and the third correlation algorithm is a modified jaccard correlation algorithm. The first correlation algorithm, the second correlation algorithm and the third correlation algorithm are executed for the semantic vector, the synonym lexicon and the key word vector to obtain respective correlation values, which are respectively a first correlation value, a second correlation value and a third correlation value. The three correlation values will be synthesized to construct a correlation matrix together by using the following algorithm:

$$M_{ij} = \sum w_q Sim_q(O_i, K_j)$$

where $M_{ij}$ is a correlation, $0$ is a semantic vector, $k$ is a key word vector, $w_q$ is a weight, $Sim_q$ is a correlation algorithm, and $i,j,q$ are natural numbers. A higher weighted value may be given to the correlation between the form title and semantic class name, this is because a name generally expresses more information than each parameter.

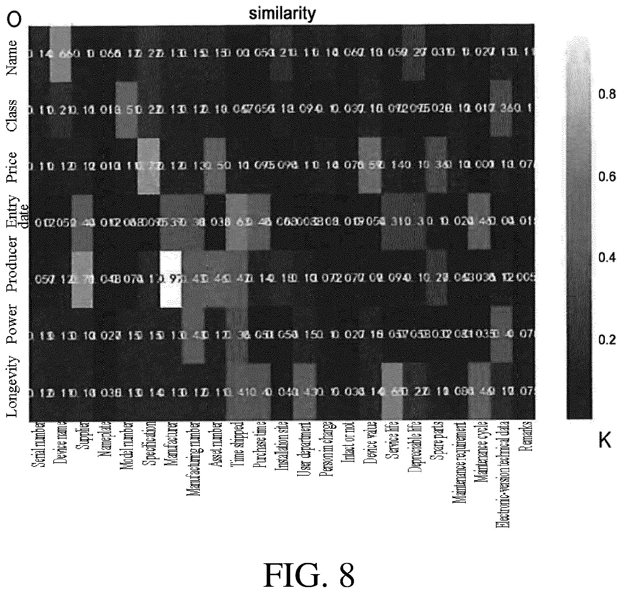

FIG. 8 shows a correlation matrix, the x-coordinate is key word vector $k$, the y-coordinate is semantic vector $0$. After the correlation matrix is obtained, parameter mapping is screened, a threshold rule is applied to determine matched key word pairs, and the output is parameter mapping, that is, a marked binary vector, representing a matching result of the form parameter. The parameter mapping shows a matched key word vector and semantic vector, Similarity Couple Determination algorithm is executed for screening parameter mapping. "1" represents matched parameters, "0" represents unmatched parameters.

Finally, the method also includes the following step after step S4: the extracting apparatus 150 extracts instance data of the semi-structured file of the key word vector corresponding to the semantic vector to the database 160. The extracting apparatus 150 extracts form data based on output of the comparing and identifying apparatus 130. In an implementation, only matched data may be extracted from the semantic model. In another implementation, data matched with and not matched with form parameters are extracted and stored, however, these data are marked with different correlation ranks. Extraction of unmatched form parameters is for the purpose of potential future analysis and utilization. Data correlation is also identified and extracted.

According to a second aspect, the present invention provides a semantic model instantiation system, including a processor; and a memory coupled with the processor, where the memory has instructions stored therein, the instructions enable an electronic device to execute actions when being executed by the processor, and the actions include : S1, receiving an ontology-based semantic model, parsing the semantic model and converting the semantic model into a characteristic vector set, where the characteristic vectors represent the classes and attributes of an ontology and a relation between the attributes; S3, importing a semi-structured file, and converting the semi-structured file into a key word vector based on the semantic vector of the semantic model; and S4, comparing a correlation between the semantic vector and the key word vector, and identifying a key word vector corresponding to the semantic vector. Further, the following action is included between action S1 and action S3: S2, matching a near-synonym of a word of the semantic vector based on the semantic vector of the semantic model. Action S3 also includes: converting the semi-structured file into a key word vector based on the semantic vector based on the semantic model and the near-synonym thereof.

Further, the following action is included after action S4: extracting instance data of the semi-structured file of the key word vector corresponding to the semantic vector to a database.

Further, the ontology includes classes, attributes and a relation between the attributes.

Further, action S3 also includes the following action when the semi-structured file is a form file: determining a header position of the form file, and identifying a data division of the form file. Further, action S4 also includes: executing multiple correlation computing methods based on the semantic vector, a synonym lexicon and the key word vector to obtain multiple correlation values to compare a correlation of the semantic vector and the key word vector, weighting the correlation values to construct a correlation matrix and screening out parameter mapping to identify a key word vector corresponding to the semantic vector, where the parameter mapping shows a matched key word vector and semantic vector.

Further, the correlation matrix is constructed according to the following algorithm:

$$M_{ij} = \sum w_q \text{Sim}_q(O_i, K_j)$$

where $M_{ij}$ is a correlation, 0 is a semantic vector, k is a key word vector, $w_q$ is a weight, $\text{Sim}_q$ is a correlation algorithm, and i,j,q are natural numbers.

According to a third aspect, the present invention provides a semantic model instantiation apparatus, including a first converting apparatus, for receiving an ontology-based semantic model, parsing the semantic model and converting the semantic model into a characteristic vector set, where the characteristic vectors represent the classes and attributes of an ontology and a relation between the attributes; a second converting apparatus, for importing a semi-structured file, and converting the semi-structured file into a key word vector based on the semantic vector of the semantic model; and a comparing and identifying apparatus, for comparing a correlation of the semantic vector and the key word vector, and identifying a key word vector corresponding to the semantic vector.

According to a fourth aspect, the present invention provides a computer program product, the computer program product is tangibly stored on a computer readable medium and includes a computer executable instruction, and the computer executable instruction enables at least one processor to execute the method described according to the first aspect of the present invention when being executed.

According to a fifth aspect, the present invention provides a computer readable medium, the computer readable medium stores a computer executable instruction, and the computer executable instruction enables at least one processor to execute the method described according to the first aspect of the present invention when being executed.

Innovations of the present invention lie in that a semantic model is converted into semantic vectors, including class vectors and correlation vectors, synonyms are computed and a synonym lexicon is constructed for each semantic vector. A separate semantic vector acts as an information extraction guidance. As a result, any semantic model may be dissected to be many retrieval formulae for data retrieval, being conducive to automatic matching and a data retrieval process described by the semantic model.

Innovation of the present invention also lies in that useful header data coming from any semi-structured file are organized and converted into key word vectors, including a key word parameter division identifying form files and a data division, and these key word parameters are extracted to obtain a tree structure. As a result, a form may be converted into vectors, and the vectors may be used for further comparison and computation for data extraction. Innovation of the present invention further lies in that correlation mapping of any semantic vector and a key word vector is extracted, and relevant information is extracted from a semi-structured file. This is for computing distinction between the semantic vector and the key word vector, and matching parameter mapping. According to the present invention, a model-based rapid and automatic mode for estimating and matching data is realized.

The present invention can greatly reduce workload and expense for constructing a knowledge graph, and thus accelerates knowledge-based convenient service.

Although the content of the present invention has been described in detail through the above preferred embodiments, it should be understood that the above description should not be considered as a limitation on the present invention. For those skilled in the art, various modifications and replacements to the present invention will be apparent after reading the above content. Therefore, the protection scope of the present invention should be subject to the appended claims . In addition, any reference numerals in the claims shall not be construed as limiting the claims; the word "include/comprise" does not exclude other apparatuses or steps not listed in claims or the specification; the words such as "first" and "second" are only used to indicate names, and do not indicate any particular order.

**Claims**

1. A semantic model instantiation method, comprising the following steps:

   S1, receiving an ontology-based semantic model, parsing the semantic model and converting the semantic model into a characteristic vector set, wherein the characteristic vectors represent the classes and attributes of an ontology and a relation between the attributes;

   S3, importing a semi-structured file, and converting the semi-structured file into a key word vector based on a semantic vector of the semantic model; and

   S4, comparing a correlation between the semantic vector and the key word vector, and identifying a key word vector corresponding to the semantic vector.

2. The semantic model instantiation method according to claim 1, also comprising the following step between step S1 and step S3:

S2, matching a near-synonym of a word of the semantic vector based on the semantic vector of the semantic model,

step S3 also comprising the following step:

converting the semi-structured file into a key word vector based on the semantic vector based on the semantic model and the near-synonym thereof.

3. The semantic model instantiation method according to claim 1, also comprising the following step after step S4: extracting instance data of the semi-structured file of the key word vector corresponding to the semantic vector to a database.

4. The semantic model instantiation method according to claim 1, wherein the ontology comprises classes, attributes and a relation between the attributes.

5. The semantic model instantiation method according to claim 1, wherein step S3 also comprises the following step when the semi-structured file is a form file:

determining a header position of the form file, and identifying a data division of the form file.

6. The semantic model instantiation method according to claim 1, wherein step S4 also comprises the following steps: executing multiple correlation computing methods based on the semantic vector, a synonym lexicon and the key word vector to obtain multiple correlation values to compare a correlation of the semantic vector and the key word vector, weighting the correlation values to construct a correlation matrix and screening out parameter mapping to identify a key word vector corresponding to the semantic vector, wherein the parameter mapping shows a matched key word vector and semantic vector.

7. The semantic model instantiation method according to claim 6, wherein the correlation matrix is constructed according to the following algorithm:

$$M_{ij} = \sum w_q Sim_q(O_i, K_j)$$

wherein $M_{ij}$ is a correlation, $0$ is a semantic vector, $k$ is a key word vector, $w_q$ is a weight, $Sim_q$ is a correlation algorithm, and $i,j,q$ are natural numbers.

8. A semantic model instantiation system, comprising:

a processor; and

a memory coupled with the processor, the memory having instructions stored therein, the instructions enabling an electronic device to execute actions when being executed by the processor, and the actions comprising:

S1, receiving an ontology-based semantic model, parsing the semantic model and converting the semantic model into a characteristic vector set, wherein the characteristic vectors represent the classes and attributes of an ontology and a relation between the attributes;

S3, importing a semi-structured file, and converting the semi-structured file into a key word vector based on a semantic vector of the semantic model; and

S4, comparing a correlation between the semantic vector and the key word vector, and identifying a key word vector corresponding to the semantic vector.

9. The semantic model instantiation system according to claim 8, also comprising the following action between action S1 and action S3:

S2, matching a near-synonym of a word of the semantic vector based on the semantic vector of the semantic model, action S3 also comprising:

converting the semi-structured file into a key word vector based on the semantic vector based on the semantic model and the near-synonym thereof.

**10.** The semantic model instantiation system according to claim 8, also comprising the following action after action S4: extracting instance data of the semi-structured file of the key word vector corresponding to the semantic vector to a database.

**11.** The semantic model instantiation system according to claim 8, wherein the ontology comprises classes, attributes and a relation between the attributes.

**12.** The semantic model instantiation system according to claim 8, wherein action S3 also comprises the following action when the semi-structured file is a form file:
determining a header position of the form file, and identifying a data division of the form file.

**13.** The semantic model instantiation system according to claim 8, wherein action S4 also comprises the following steps: executing multiple correlation computing methods based on the semantic vector, a synonym lexicon and the key word vector to obtain multiple correlation values to compare a correlation of the semantic vector and the key word vector, weighting the correlation values to construct a correlation matrix and screening out parameter mapping to identify a key word vector corresponding to the semantic vector, wherein the parameter mapping shows a matched key word vector and semantic vector.

**14.** The semantic model instantiation system according to claim 13, wherein the correlation matrix is constructed according to the following algorithm:

$$M_{ij} = \sum w_q Sim_q(O_i, K_j)$$

wherein $M_{ij}$ is a correlation, $0$ is a semantic vector, $k$ is a key word vector, $w_q$ is a weight, $Sim_q$ is a correlation algorithm, and $i,j,q$ are natural numbers.

**15.** A semantic model instantiation apparatus, including:

a first converting apparatus, for receiving an ontology-based semantic model, parsing the semantic model and converting the semantic model into a characteristic vector set, where the characteristic vectors represent the classes and attributes of an ontology and a relation between the attributes;
a second converting apparatus, for importing a semi-structured file, and converting the semi-structured file into a key word vector based on a semantic vector of the semantic model; and
a comparing and identifying apparatus, comparing a correlation of the semantic vector and the key word vector, and identifying a key word vector corresponding to the semantic vector.

**16.** A computer program product, wherein the computer program product is tangibly stored on a computer readable medium and comprises a computer executable instruction, and the computer executable instruction enables at least one processor to execute the method according to any one of claims 1-7 when being executed.

**17.** A computer readable medium, wherein the computer readable medium stores a computer executable instruction, and the computer executable instruction enables at least one processor to execute the method according to any one of claims 1-7 when being executed.

FIG. 1

**Maintenance**

Serial number
Manpower
Month
Week
Planned time
Actual time
Working hours
Grade

**Device**

Parameters
Name
Service start time
Class
Power

**Manpower**

Name
Telephone number
Rank
Gender
Number

**Material**

Purchase time
Name
Purchase number
Supplier
Purchase quantity

Product model

**Product**

Order number
Picture confirmation
Actual transport time
Contract
Mode of transport
Client
Planned transport time
Payment
Price
Structure
Production capacity

**Technology**

Actual start time
Actual ending time
Blockage
Buffer zone
dimension
Planned ending
time
Serial number
Planned start time
Name

**Workshop**

Name

FIG. 2

120

B

1201

1202

1203

FIG. 3

ULC

$C_1$  $C_2$

$C_3$

| C1 | | |
| ULC | h1 | RH |
| | C2 | |
| h2 | C3 | |
| CH | | Data |
| | | C4 |

h1

RH

h2

Wire pressing team

CH

| Demo Table 1 : Standard double-tree table | | | | | | | | | |
|---|---|---|---|---|---|---|---|---|---|
| Personnel | | | | | Skill rank | | | | |
| Basic information | | | Contact information | | Basic skills | | Professional skills | | |
| Name | Gender | Employee number | Telephone number | WeChat | Skill 1 | Skill 2 | Skill 3 | Skill 4 | |
| Zhang XX | Male | 1 | 1001 | abc | 92 | 91 | 38 | 82 | |
| Wang XX | Female | 2 | 1002 | bcd | 91 | 18 | 0 | 23 | |
| Li XX | Male | 3 | 1003 | abc | 62 | 18 | 13 | 47 | |
| Zhao XX | Female | 4 | 1004 | bcd | 50 | 95 | 7 | 63 | |
| Yang XX | Male | 5 | 1( | | | 8 | 43 | 72 | |
| Ma XX | Female | 6 | 1( | Data | | 39 | 11 | 83 | |
| Liu XX | Male | 7 | 1( | | | 50 | 21 | 23 | |
| Zhou XX | Female | 8 | 1( | | | 27 | 71 | 34 | |
| Bi XX | Male | 9 | 1009 | abc | 25 | 36 | 48 | 64 | |
| Du XX | Female | 10 | 1010 | bcd | 97 | 86 | 47 | 52 | |
| Qi XX | Male | 11 | 1011 | abc | 35 | 31 | 74 | 43 | |
| Sun XX | Female | 12 | 1012 | bcd | 75 | 11 | 77 | 11 | |
| Xia XX | Male | 13 | 1013 | abc | 5 | 16 | 5 | 30 | |
| He XX | Female | 14 | 1014 | bcd | 79 | 37 | 38 | 15 | |

Team A

Team B

Team C

$C_4$

## FIG. 4

Identify $C_1$, $C_2$, $h_1$ and $h_2$ of the ULC division

$h_1 > 0$ & $h_2 > 0$

Not met → Identify $C_3$ according to an extracting rule of a one-dimensional form

Met

$RH = h_1$ & $CH = h_2$ → Met → Identify $C_3$ according to an extracting rule of a two-dimensional form

Not met

$RH < h_1$ Or $CH < h_2$ → Met → Compute a correlation between semantic vectors and key word vectors → Identify $C_3$ and extract a potentially embedded one-dimensional form

Not met

$RH > h_1$ → Met → Extract RH and $C_3$ of a data division

Not met

$CH > h_2$ → Met → Extract CH and $C_3$ of the data division

FIG. 5

FIG. 6

```
┌──────────────┐      ┌──────────────┐      ┌──────────────┐
│   Semantic   │      │   Synonym    │      │   Key word   │
│    vector    │      │   lexicon    │      │    vector    │
└──────────────┘      └──────────────┘      └──────────────┘
```

```
┌──────────────┐        ┌──────────────┐        ┌──────────────┐
│    First     │        │    Second    │        │    Third     │
│ correlation  │  ...   │ correlation  │  ...   │ correlation  │
│  algorithm   │        │  algorithm   │        │  algorithm   │
└──────────────┘        └──────────────┘        └──────────────┘
```

First correlation          Second correlation          Third correlation
    value                        value                      value

```
┌────────────────────────────────────────┐
│      Compute a correlation matrix       │
└────────────────────────────────────────┘
```

```
┌────────────────────────────────────────┐
│        Screen parameter mapping         │
└────────────────────────────────────────┘
```

Parameter mapping

# FIG. 7

FIG. 8

## INTERNATIONAL SEARCH REPORT

| | International application No. |
| --- | --- |
| | **PCT/CN2019/093873** |

**A.    CLASSIFICATION OF SUBJECT MATTER**

G06F 40/30(2020.01)i

According to International Patent Classification (IPC) or to both national classification and IPC

**B.    FIELDS SEARCHED**

Minimum documentation searched (classification system followed by classification symbols)

G06F40/-; G06F17/-

Documentation searched other than minimum documentation to the extent that such documents are included in the fields searched

Electronic data base consulted during the international search (name of data base and, where practicable, search terms used)

CNABS, SIPOABS, CNTXT, DWPI, CNKI: 语义, 模型, 解析, 转化, 转换, 变换, 特征向量, 半结构化, 表格, 关键词, semantics, model, parsing, analysis, transfer, transform, convert, change, feature vetor, eigenvector, semi structured, table, form, chart, list, keyword

**C.    DOCUMENTS CONSIDERED TO BE RELEVANT**

| Category* | Citation of document, with indication, where appropriate, of the relevant passages | Relevant to claim No. |
| --- | --- | --- |
| A | CN 104063502 A (CENTRAL SOUTH UNIVERSITY) 24 September 2014 (2014-09-24) entire document | 1-17 |
| A | CN 1766871 A (GRADUATE SCHOOL OF THE CHINESE ACADEMY OF SCIENCES) 03 May 2006 (2006-05-03) entire document | 1-17 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 March 2020** | **02 April 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/093873**

| Patent document cited in search report | | | Publication date (day/month/year) | Patent family member(s) | | | Publication date (day/month/year) |
|---|---|---|---|---|---|---|---|
| CN | 104063502 | A | 24 September 2014 | CN | 104063502 | B | 22 March 2017 |
| CN | 1766871 | A | 03 May 2006 | None | | | |

Form PCT/ISA/210 (patent family annex) (January 2015)